# EUROPEAN PATENT SPECIFICATION

(11) **EP 3 823 133 B1**
(45) Date of publication and mention of the grant of the patent: **04.12.2024**
(21) Application number: 18932512.9
(22) Date of filing: 19.10.2018
(51) Int. Cl.: B61C 17/12, H02J 9/06, B60L 9/26, B60L 1/00, B60L 3/00, B60L 9/08, B60L 9/24, B60L 15/32, B60L 3/04

(54) **TRAIN RESCUE POWER SUPPLY CIRCUIT, CONTROL METHOD AND DEVICE**
NOTSTROMVERSORGUNGSSCHALTUNG FÜR ZUG, STEUERUNGSVERFAHREN UND -VORRICHTUNG
CIRCUIT D'ALIMENTATION ÉLECTRIQUE DE SECOURS DE TRAIN, PROCÉDÉ ET DISPOSITIF DE COMMANDE

(30) Priority: 06.09.2018 CN 201811037699
(43) Date of publication of application: 19.05.2021
(73) Proprietor: Zhuzhou CRRC Times Electric Co., Ltd., Zhuzhou, Hunan 412001 (CN)
(72) Inventor: HUANG, Hao, Zhuzhou, Hunan 412001 (CN); ZOU, Dangbing, Zhuzhou, Hunan 412001 (CN); XU, Shaolong, Zhuzhou, Hunan 412001 (CN); ZHANG, Zhibing, Zhuzhou, Hunan 412001 (CN); LIU, Liangjie, Zhuzhou, Hunan 412001 (CN); LIU, Yongjiang, Zhuzhou, Hunan 412001 (CN); YAO, Zhonghong, Zhuzhou, Hunan 412001 (CN); LIN, Zhenjun, Zhuzhou, Hunan 412001 (CN); XUE, Xin, Zhuzhou, Hunan 412001 (CN); ZOU, Donghai, Zhuzhou, Hunan 412001 (CN); FU, Gang, Zhuzhou, Hunan 412001 (CN); PENG, Hongji, Zhuzhou, Hunan 412001 (CN); QI, Shanjun, Zhuzhou, Hunan 412001 (CN); LI, Wenliang, Zhuzhou, Hunan 412001 (CN); YE, Haifeng, Zhuzhou, Hunan 412001 (CN)
(74) Representative: Thoma, Michael
(86) International application number: PCT/CN2018/110991
(87) International publication number: WO 2020/047954

(56) References cited:
- EP-A1- 0 514 580
- EP-A1- 2 862 742
- EP-A1- 2 872 359
- EP-B1- 2 872 359
- CN-A- 103 213 507
- CN-A- 106 026 691
- CN-A- 108 016 466
- CN-A- 108 016 466
- CN-U- 202 127 366
- CN-U- 202 127 366
- DE-C1- 19 547 465
- DE-C1- 19 610 800
- JP-B2- 5 215 778

## Description

### FIELD

The present disclosure relates to the field of power supply for fault rail train rescue, and in particular to a power supply circuit for train rescue, a power supply control method for train rescue and a power supply control device for train rescue.

### BACKGROUND

Power supply circuits for train rescue are known in different prior art examples, cf. EP 2 872 359 A1, DE 195 47 465 C1, EP 0 514 580 A1, EP 28 62 742 A1, DE 196 108 00 C1, CN 108 016 466 A and CN 202 127 366 U.

With the development of science and technology in modern society, rail trains are widely used in people's production and life. In a case that a train fails to run normally due to a fault, another train (a rescue train) is generally required to tow the fault train to a destination.

In conventional technologies, a rescue train cannot directly supply power to a fault train (a rescued train), and auxiliary loads (such as an air conditioner, a lighting device and a ventilation device) of the fault train can only operate, in a case that the rescue train is towing the fault train or in a case that a speed of the fault train reaches a predetermined speed under the towing of the rescue train, by means of devices and controlling solutions of the fault train itself. Therefore, in the above conventional solution, if the auxiliary loads of the fault train are required to operate normally during a rescue towing process for the rescued train, it is required to additionally arrange devices to the fault train, which results in a high design cost. In addition, in the above conventional solution, since an auxiliary power supply system of the fault train can not operate during a period from a time when the fault train is stationary to a time when the speed of the fault train runs at a minimum speed threshold for power generation, the auxiliary loads of the fault train cannot operate during this period, thus riding comfort on the fault train is severely affected during this period of the rescue towing process.

Therefore, a problem to be solved urgently is how to directly supply power to the fault train by the rescue train to operate auxiliary loads of the fault train normally during a rescue towing process for the fault train, so as to maintain a comfortable environment for passengers on the fault train and relieve work pressure for the crew members and the driver, and to reduce the design cost.

### SUMMARY

An object of the present disclosure is to provide a power supply circuit for train rescue, a power supply control method for train rescue and a power supply control device for train rescue, so as to directly supply power to a fault train by a rescue train, thereby reducing a design cost and improving user experience.

In order to solve the above technical problem, a power supply circuit for train rescue is provided according to the present disclosure. The power supply circuit for train rescue is applied to a rescue train and includes a traction transformer, traction motors, and a converter inverter including a first predetermined number of independent axis control circuits. For each of the first predetermined number of independent axis control circuits, an input terminal of the independent axis control circuit is connected to secondary windings of a traction transformer corresponding to the independent axis control circuit, and an output terminal of the independent axis control circuit is connected to a traction motor corresponding to the independent axis control circuit. Each of a second predetermined number of independent axis control circuits in the first predetermined number of independent axis control circuits includes a first power supply isolation switch and a second power supply isolation switch. The first power supply isolation switch is configured to connect a positive wire of an intermediate direct current link of the independent axis control circuit to a rescued train or disconnect the positive wire from the rescued train. The second predetermined number is less than or equal to the first predetermined number. The second power supply isolation switch is configured to connect a negative wire of the intermediate direct current link of the independent axis control circuit to the rescued train or disconnect the negative wire from the rescued train.

In an embodiment, each of the first predetermined number of independent axis control circuits includes a high voltage electrical switch, a rectifier device, an intermediate direct current link and an inverter device. The high voltage electrical switch is connected to a secondary winding of the traction transformer corresponding to the independent axis control circuit and is configured to input or isolate a supply voltage that is obtained by reducing a voltage of a power grid through the traction transformer. The rectifier device is connected to the high voltage electrical switch and is configured to rectify the supply voltage to obtain a direct current voltage. The intermediate direct current link is connected to the rectifier device and is configured to output and store electrical energy of the independent axis control circuit. The inverter device is connected to the intermediate direct current link and is configured to invert the direct current voltage in the intermediate direct current link to obtain an alternating current voltage, so as to supply power to a traction motor connected to the independent axis control circuit.

In an embodiment, a first end of the second power supply isolation switch is connected to a negative wire of an intermediate direct current link where the second power supply isolation switch is arranged. A second end of the second power supply isolation switch is connected to a wheelset of the rescue train.

In an embodiment, each of the second predetermined number of independent axis control circuits includes an intermediate direct current voltage sensor. The intermediate direct current voltage sensor is configured to detect a voltage of an intermediate direct current link of the independent axis control circuit.

A power supply control method for train rescue is further provided according to the present disclosure. The method is applied to a rescue train including the power supply circuit for train rescue according to any one of the above embodiments. The method includes: acquiring a rescue power supply instruction, and controlling, in response to the rescue power supply instruction, a first power supply isolation switch and a second power supply isolation switch in an independent axis control circuit selected based on the rescue power supply instruction among the second predetermined number of independent axis control circuits to be switched on, so as to supply power to the recued train through the independent axis control circuit selected based on the rescue power supply instruction.

In an embodiment, in a case that an end of the second power supply isolation switch of the independent axis control circuit selected based on the rescue power supply instruction is connected to a wheelset, the controlling, in response to the rescue power supply instruction, a first power supply isolation switch and a second power supply isolation switch in an independent axis control circuit selected based on the rescue power supply instruction among the second predetermined number of independent axis control circuits to be switched on includes: controlling the second power supply isolation switch of the independent axis control circuit selected based on the rescue power supply instruction to be switched on; determining whether a voltage of the intermediate direct current link of the independent axis control circuit selected based on the rescue power supply instruction is within a first predetermined range; and controlling, if the voltage of the intermediate direct current link of the independent axis control circuit selected based on the rescue power supply instruction is within the first predetermined range, the first power supply isolation switch of the independent axis control circuit selected based on the rescue power supply instruction to be switched on. If the voltage of the intermediate direct current link of the independent axis control circuit selected based on the rescue power supply instruction is not within the first predetermined range, it is determined whether the voltage is within a second predetermined range. If the voltage is within the second predetermined range, it is determined that there is a positive wire grounded point in the independent axis control circuit selected based on the rescue power supply instruction, and the high voltage electrical switch and the second power supply isolation switch of the independent axis control circuit selected based on the rescue power supply instruction switching off.

In an embodiment, after controlling the first power supply isolation switch of the independent axis control circuit selected based on the rescue power supply instruction to be switched on, the method further includes: determining whether the voltage is within the first predetermined range; determining whether the voltage is within the second predetermined range if the voltage is not within the first predetermined range; and determining that there is a positive wire grounded point in the rescued train if the voltage is within the second predetermined range and switching off the first power supply isolation switch and the second power supply isolation switch.

In an embodiment, the determining that there is a positive wire grounded point in the rescued train and switching off the first power supply isolation switch and the second power supply isolation switch includes: switching off the high voltage electrical switch, the first power supply isolation switch and the second power supply isolation switch; switching on the high voltage electrical switch and the second power supply isolation switch after a predetermined time threshold and determining whether the voltage is within the first predetermined range; determining that there is a positive wire grounded point in the rescued train if the voltage is within the first predetermined range and switching off the second power supply isolation switch; determining whether the voltage is within the second predetermined range if the voltage is not within the first predetermined range; and determining, if the voltage is within the second predetermined range, that there is a positive grounded point in the independent axis control circuit selected based on the rescue power supply instruction and switching off the high voltage electrical switch and the second power supply isolation switch.

In an embodiment, after the determining that there is a positive wire grounded point in the independent axis control circuit selected based on the rescue power supply instruction, the method further includes: sending a rescue circuit switching instruction to a prompt device to prompt a user to switch the independent axis control circuit to another independent axis control circuit among the second predetermined number of independent axis control circuits.

In an embodiment, the method further includes: acquiring a traction level instruction; controlling a high voltage electrical switch of a current independent axis control circuit to be switched on and controlling a rectifier device of the current independent axis control circuit to be started, where the current independent axis control circuit indicates one of the independent axis control circuits that is selected based on the traction level instruction; determining whether a voltage of an intermediate direct current link of the current independent axis control circuit is within the first predetermined range; and starting an inverter device of the current independent axis control circuit if the voltage is within the first predetermined range, to supply power to a traction motor connected to the inverter device of the current independent axis control circuit.

In addition, a power supply control device for train rescue is further provided according to the present disclosure. The device is applied to a rescue train including the power supply circuit for train rescue according to any one of the above embodiments. The device includes an acquisition module and a control module. The acquisition module is configured to acquire a rescue power supply instruction. The control module is configured to control, in response to the rescue power supply instruction, a first power supply isolation switch and a second power supply isolation switch in an independent axis control circuit selected based on the rescue power supply instruction among the second predetermined number of independent axis control circuits to be switched on, so as to supply power to a recued train through the independent axis control circuit selected based on the rescue power supply instruction.

The power supply circuit for train rescue according to the present disclosure is applied to a rescue train. The power supply circuit for train rescue includes a traction transformer, traction motors, and a converter inverter including a first predetermined number of independent axis control circuits. For each of the first predetermined number of independent axis control circuits, an input terminal of the independent axis control circuit is connected to a secondary winding of a traction transformer corresponding to the independent axis control circuit and an output terminal of the independent axis control circuit is connected to a traction motor corresponding to the independent axis control circuit. Each of a second predetermined number of independent axis control circuits in the first predetermined number of independent axis control circuits includes a first power supply isolation switch and a second power supply isolation switch. The first power supply isolation switch is configured to connect a positive wire of an intermediate direct current link of the independent axis control circuit to a rescued train or disconnect the positive wire from the rescued train. The second predetermined number is less than or equal to the first predetermined number. The second power supply isolation switch is configured to connect a negative wire of the intermediate direct current link of the independent axis control circuit to the rescued train or disconnect the negative wire from the rescued train.

It can be seen that in the present disclosure, each of the second predetermined number of independent axis control circuits in the converter inverter is provided with a first power supply isolation switch and a second power supply isolation switch, such that a positive wire and a negative wire of an intermediate direct current link of each of the second predetermined number of independent axis control circuits can be used to directly supply power to the rescued train through the first power supply isolation switch and the second power supply isolation switch. In this way, auxiliary loads of the rescued train can normally operate during a rescue towing process for the rescued train, thereby maintaining a comfortable environment of the fault train for passengers and relieving work pressure to the crew members and the driver, thus improving user experience and reducing the design cost. In addition, a power supply control method for train rescue and a power supply control device for train rescue are further provided, which can achieve the same beneficial effects as described above.

### BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below show merely the embodiments of the present disclosure, and those skilled in the art may obtain other drawings according to the provided drawings without any creative effort.
Figure 1 is a schematic structural diagram of a power supply circuit for train rescue according to an embodiment of the present disclosure;
Figure 2 is a flowchart of a power supply control method for train rescue according to an embodiment of the present disclosure;
Figure 3 is a flowchart of another power supply control method for train rescue according to an embodiment of the present disclosure;
Figure 4 is a flowchart of the another power supply control method for train rescue according to an embodiment of the present disclosure under a static operating condition;
Figure 5 is a flowchart of the another power supply control method for train rescue according to an embodiment of the present disclosure under a dynamic operating condition;
Figure 6 is a flowchart of a power supply control method for train rescue according to another embodiment of the present disclosure; and
Figure 7 is a structural diagram of a power supply control device for train rescue according to an embodiment of the present disclosure.

### DETAILED DESCRIPTION OF EMBODIMENTS

In order to make the object, technical solutions and advantages of the embodiments of the present disclosure more clear, technical solutions of the embodiments of the present disclosure are clearly and completely described below in conjunction with the drawings of the embodiments of the present disclosure. Apparently, the embodiments described in the following are only some embodiments of the present disclosure, rather than all the embodiments. Any other embodiments obtained by those skilled in the art based on the embodiments in the present disclosure without any creative effort fall within the protection scope of the present disclosure.

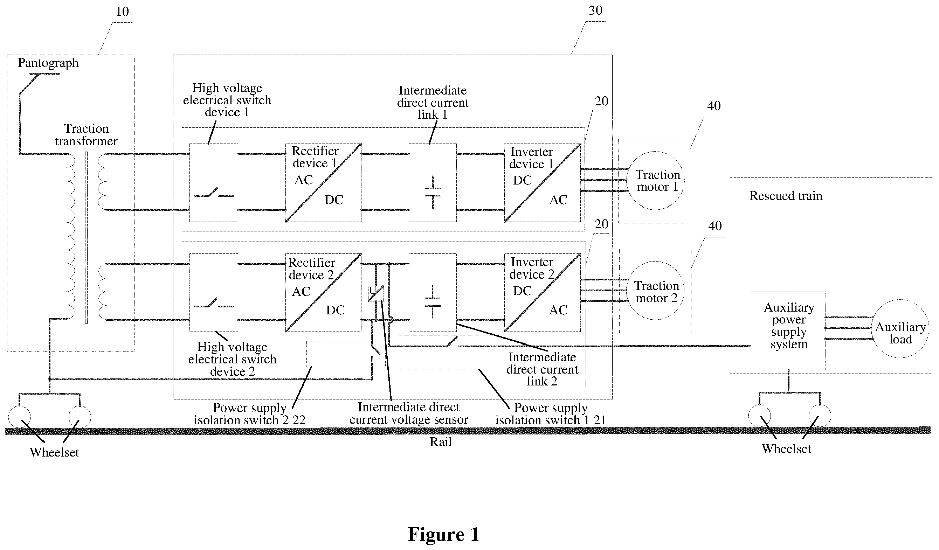

Referring to Figure 1, Figure 1 is a schematic structural diagram of a power supply circuit for train rescue according to an embodiment of the present disclosure. The circuit is applied to a rescue train. The circuit may include a traction transformer 10, traction motors 40, and a converter inverter 30 including a first predetermined number of independent axis control circuits 20.

Input terminals of the first predetermined number of independent axis control circuits 20 are connected to secondary windings of the traction transformer 10 in one-to-one correspondence. Output terminals of the first predetermined number of independent axis control circuits are connected to the traction motors 40 in one-to-one correspondence.

Each of a second predetermined number of independent axis control circuits 20 includes a first power supply isolation switch 21 and a second power supply isolation switch 22. The first power supply isolation switch 21 is configured to connect a positive wire of an intermediate direct current link of the independent axis control circuit 20 to a rescued train or disconnect the positive wire from the rescued train. The second predetermined number is less than or equal to the first predetermined number. The second power supply isolation switch 22 is configured to connect a negative wire of the intermediate direct current link of the independent axis control circuit 20 to the rescued train or disconnect the negative wire from the rescued train.

It is to be understood that the second predetermined number of independent axis control circuits 20 in the embodiment may be part or all of the first predetermined number of independent axis control circuits 20 in the converter inverter 30 (CI). The number of the independent axis control circuits 20 included in the converter inverter 30 and the number of independent axis control circuits 20 each including a first power supply isolation switch 21 and a second power supply isolation switch 22, that is, the first predetermined number and the second predetermined number, may be set by a designer based on a practical scenario and user requirements. As shown in Figure 1, the converter inverter 30 may include two independent axis control circuits 20. One of the two independent axis control circuits 20 is provided with a first power supply isolation switch 21 and a second power supply isolation switch 22. That is, the first predetermined number is equal to 2 and the second predetermined number is equal to 1. The first predetermined number and the second predetermined number are not limited in the embodiment as long as there is at least one independent axis control circuit 20 provided with a first power supply isolation switch 21 and a second power supply isolation switch 22 in the converter inverter 30, that is, the second predetermined number is less than or equal to the first predetermined number and is not equal to 0.

It is to be noted that an object of the embodiment may be described below. The first power supply isolation switch 21 and the second power supply isolation switch 22 is provided in the second predetermined number of independent axis control circuits 20, such that in a case that the first power supply isolation switch 21 and the second power supply isolation switch 22 are switched on, a positive wire and a negative wire of an intermediate direct current link of an independent axis control circuit 20 where the first power supply isolation switch 21 and the second power supply isolation switch 22 that are switched on are arranged can be connected to the rescued train, to output an intermediate direct current voltage to the rescued train. That is, each of the second predetermined number of independent axis control circuits 20 in the embodiment may include a first power supply isolation switch 21 and a second power supply isolation switch 22.

Accordingly, in the embodiment, if the first power supply isolation switch 21 and the second power supply isolation switch 22 in the independent axis control circuit 20 of the rescue train are to be connected to the rescued train directly through power supply wires, a user (a repairer or a driver) is required to connect power supply wires respectively connected to an end of the first power supply isolation switch required to be switched on and an end of the second power supply isolation switch required to be switched from the rescue train to the rescued train. In order to reduce a workload of the user, an amount of usage of the power supply wires, a weight of the train, a cost and difficulty of wiring in the train, as shown in Figure 1, the rescue train may be connected to the rescued train through the first power supply isolation switch or the second power supply isolation switch based on a connection between a wheelset of the rescue train and a wheelset of the rescued train through a rail. That is, the first power supply isolation switch or the second power supply isolation switch may be connected to the wheelset of the rescue train. For example, a first end of the second power supply isolation switch 22 may be connected to a positive wire of an intermediate direct current link of an independent axis control circuit where the second power supply isolation switch 22 is arranged, and a second end of the second power supply isolation switch 22 may be connected to the wheelset of the rescue train, so that a ground return circuit is formed for the positive wire of the intermediate direct current link of the independent axis control circuit 20 where the second power supply isolation switch 22 is arranged through the second power supply isolation switch 22, the wheelset of the rescued train and the rail. Alternatively, a first end of the first power supply isolation switch 21 is connected to a positive wire of an intermediate direct current link of an independent axis control circuit 20 where the first power supply isolation switch 21 is arranged, and a second end of the first power supply isolation switch 21 is connected to the wheelset of the rescue train, so that a ground return circuit is formed for positive wire of the intermediate direct current link of the independent axis control circuit 20 where the first power supply isolation switch 21 is arranged through the first power supply isolation switch 21, the wheelset of the rescued train and the rail. Whether the first power supply isolation switch 21 or the second power supply isolation switch 22 is connected to the wheelset of the rescue train is not limited in the embodiment.

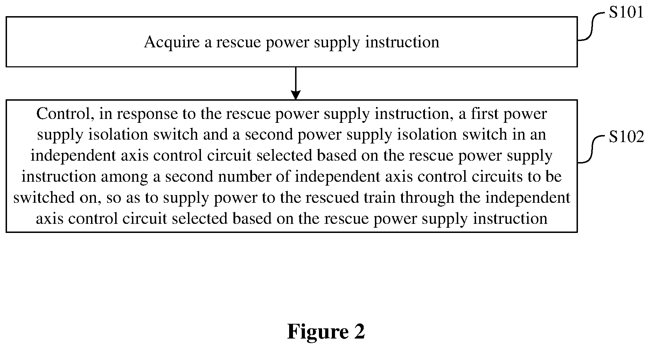

For each of the independent axis control circuits 20 in the converter inverter 30 in the embodiment, a structure of the independent axis control circuit 20 may be set by a designer based on a practical scenario and user requirements. As shown in Figure 1, each of the independent axis control circuits 20 may include a high voltage electrical switch connected to a secondary winding of a traction transformer 10 corresponding to the independent axis control circuit, a rectifier device connected to the high voltage electrical switch, an intermediate direct current link connected to the rectifier device, and an inverter device connected to the intermediate direct current link. The high voltage electrical switch is configured to input or isolate a supply voltage obtained by reducing a voltage from a power grid through the traction transformer 10. The rectifier device is configured to rectify the supply voltage to obtain a direct current voltage. That is, the supply voltage is increased through the secondary winding of the traction transformer 10, and an increased alternating current voltage is rectified by the rectifier device to obtain a direct current voltage, such that a voltage of the intermediate direct current link is stably maintained within a predetermined range (at a rated intermediate direct current voltage). The intermediate direct current link is configured to output and store the electrical energy of the independent axis control circuit 20. The inverter device is configured to invert the direct current voltage in the intermediate direct current link to obtain an alternating current voltage so as to supply power to a traction motor 40 connected to the independent axis control circuit. That is, the inverter device acquires power from the intermediate direct current link, inverts the direct current voltage to obtain an alternating current voltage with a variable voltage and a variable frequency, and controls the traction motor 40 to operate according to an operation of the driver. Each independent axis control circuit 20 or each of the second predetermined number of independent axis control circuits 20 may further include an intermediate direct current voltage sensor configured to detect a voltage of a corresponding intermediate direct current link. As shown in Figure 2, the intermediate direct current voltage sensor may detect a voltage of an intermediate direct current link of an independent axis control circuit 20 where the intermediate direct current voltage sensor is arranged, so that a processor, such as a drive control unit (DCU), can determine whether there is a negative wire grounded point or a positive wire grounded point based on the voltage detected by the intermediate direct current voltage sensor when the first isolation switch or the second isolation switch is connected to the wheelset of the rescue train. Whether each independent axis control circuit 20 includes an intermediate direct current voltage sensor or each of the second predetermined number of independent axis control circuits 20 includes an intermediate direct current voltage sensor is not limited in the embodiment, as long as each of the second predetermined number of independent axis control circuits 20 may include an intermediate direct current link, to apply a direct current voltage of the intermediate direct current link to the rescued train via the switched-on first power supply isolation switch 21 and second power supply isolation switch 22 therein.

Accordingly, the rescue train may further include a processor such as a DCU, to control the power supply isolation switches, high voltage electrical switches, rectifier devices and inverter devices in the CI in response to a signal of, such as a voltage of a power grid, a voltage of an intermediate direct current link, a speed of the train, states of the switches and a control instruction signal sent by the driver.

It is to be noted that a device used by the rescue train to supply power to the rescued train in the embodiment may be set by a designer based on a practical scenario and user requirements. For example, as shown in Figure 1, the rescue train only supplies power to an auxiliary power supply system of the rescued train, that is, the rescue train only supplies power for maintaining operations of auxiliary loads (such as an air conditioner, a lighting device and a ventilation device). The rescue train may further supply power to other systems of the rescued train, which is not limited in the embodiment.

It can be seen that, in the present disclosure, each of the second predetermined number of independent axis control circuits 20 in the converter inverter 30 is provided with a first power supply isolation switch 21 and a second power supply isolation switch 22, and power can be directly supplied to the rescued train via a positive wire and a negative wire of an intermediate direct current link of the independent axis control circuit 20 through the first power supply isolation switch 21 and the second power supply isolation switch 22, such that auxiliary loads of the rescued train can operate normally during the rescue towing process for the rescued train, thereby maintaining a comfortable environment of the fault train for passengers and relieving work pressure for the crew members and the driver, thus improving user experience and reducing the design cost.

Based on the above embodiment, referring to Figure 2, Figure 2 is a flowchart of a power supply control method for train rescue according to an embodiment of the present disclosure. The method is applied to a rescue train including the power supply circuit for train rescue according to the above embodiment. The method may include steps 101 and 102.

In step 101, a rescue power supply instruction is acquired.

It is to be understood that in the embodiment, an arrangement that a rescue train provided with the power supply circuit for train rescue according to the above embodiment supplies power to a rescued train by using an intermediate direct current link of one of the second predetermined number of independent axis control circuits is taken as an example, and an arrangement that the rescue train supplies power to the rescued train by using intermediate direct current links of multiple of the second predetermined number of independent axis control circuits may be similar to that of the embodiment, which is not limited in the embodiment.

The rescue power supply instruction in the step may be an instruction for starting a rescue power supply that is sent to a processor, such as a DCU, for controlling the CI of a rescue train through a human-computer interaction interface in a case that a user connects a rescued train to an end of a first power supply isolation switch and/or an end of a second power supply isolation switch in one of the second predetermined number of independent axis control circuits of the rescue train. If the first power supply isolation switch and the second power supply isolation switch in the independent axis control circuit of the rescue train are to be connected to the rescued train through power supply wires, the user may send the rescue power supply instruction to the processor in a case that the rescued train is connected to an end of the first power supply isolation switch and an end of the second power supply isolation switch in one of the second predetermined number of independent axis control circuits of the rescue train. If the rescue train is connected to the rescued train via the first power supply isolation switch or the second power supply isolation switch through a wheelset and a rail, the user may send the rescue power supply instruction to the processor in a case that the rescued train is connected to the second power supply isolation switch or the first power supply isolation switch in one of the second predetermined number of independent axis control circuits of the rescue train through a power supply wire.

Accordingly, after the step, the method may further include a step of detecting whether a power supply wire is connected successfully. If the power supply wire is connected successfully, step 102 is performed. If the power supply wire is not connected successfully, a message indicating that the power supply wire is not connected successfully may be prompted to the user through a prompt device such as a display screen, a display light and a buzzer, which is not limited in the embodiment.

It is to be noted that content of the rescue power supply instruction in the step may be set by a designer based on a practical scenario and user requirements. For example, in a case that the rescue train includes multiple independent axis control circuits each of which is provided with a first power supply isolation switch and a second power supply isolation switch, taking a case in which a first end of a second power supply isolation switch arranged in each independent axis control circuit is connected to a negative wire of an intermediate direct current link of the independent axis control circuit and a second end of the second power supply isolation switch is connected to a wheelset of the rescue train as an example, if each first power supply isolation switch is connected to the rescued train through a power supply wire via a corresponding power supply wire interface arranged in the rescue train, the rescue power supply instruction may include information of an independent axis control circuit corresponding to a power supply wire interface selected by the user or detected by the processor. If each first power supply isolation switch is connected to the rescued train through a power supply wire via one power supply wire interface arranged in the rescue train, the rescue power supply instruction may be an instruction only for starting rescue power supply. That is, the processor may select one of the second predetermined number of independent axis control circuits to supply power to the rescued train, which is not limited in the embodiment.

In step S102, a first power supply isolation switch and a second power supply isolation switch in an independent axis control circuit among the second predetermined number of independent axis control circuits is controlled to be switched on in response to the rescue power supply instruction, to supply power to the recued train through the independent axis control circuit selected based on the rescue power supply instruction.

It is to be understood that the step may be performed to control, in a case that the processor receives the rescue power supply instruction, the first power supply isolation switch and the second power supply isolation switch in the independent axis control circuit selected based on the rescue power supply instruction to be switched on, to supply power to the recued train through the independent axis control circuit selected based on the rescue power supply instruction. Taking the power supply circuit for train rescue shown in Figure 1 as an example, if a pantograph of the traction transformer of the rescue train is raised, the high voltage electrical switch 2 of the independent axis control circuit selected based on the rescue power supply instruction is switched on and the rectifier device 2 is started, in the step, the first power supply isolation switch and the second power supply isolation switch may be directly switched on to supply power to the rescued train through the independent axis control circuit selected based on the rescue power supply instruction. If the pantograph of the traction transformer of the rescue train is not raised, the high voltage electrical switch 2 of the independent axis control circuit selected based on the rescue power supply instruction is not switched on and the rectifier device 2 is not started, in the step, firstly, the pantograph of the traction transformer of the rescue train may be raised, the high voltage electrical switch 2 of the independent axis control circuit selected based on the rescue power supply instruction may be switched on and the rectifier device 2 may be started, and then the first power supply isolation switch and the second power supply isolation switch may be switched on. Whether the pantograph of the traction transformer of the rescue train is raised, the high voltage electrical switch 2 of the independent axis control circuit selected based on the rescue power supply instruction is switched on and the rectifier device 2 is started is not limited in the embodiment, as long as the first power supply isolation switch and the second power supply isolation switch in the independent axis control circuit selected based on the rescue power supply instruction can be controlled to be switched on to supply power to the rescued train through the independent axis control circuit selected based on the rescue power supply instruction.

The independent axis control circuit selected based on the rescue power supply instruction among the second predetermined number of independent axis control circuits may be determined by the designer based on a practical scenario and user requirements. For example, in a case that the rescue power supply instruction includes independent axis control circuit information, the independent axis control circuit may be determined based on the independent axis control circuit information. In a case that the rescue power supply instruction does not include independent axis control circuit information, for the rescue train shown in Figure 1 which only includes one independent axis control circuit provided with a first power supply isolation switch and a second power supply isolation switch, the independent axis control circuit may indicate an independent axis control circuit selected based on the rescue power supply instruction. For a rescue train including multiple independent axis control circuits each of which is provided with a first power supply isolation switch and a second power supply isolation switch, the processor may determine an independent axis control circuit based on a predetermined algorithm as an independent axis control circuit selected based on the rescue power supply instruction, which is not limited in the embodiment.

It is to be noted that after the first isolation switch or the second isolation switch is connected to the wheelset of the rescue train, in a case that the first isolation switch or the second isolation switch of the independent axis control circuit selected based on the rescue power supply instruction that is connected to the wheelset of the rescue train is switched on, that is, in a case that the a positive wire or a negative wire of an intermediate direct current link of the independent axis control circuit is grounded, if there is a negative wire grounded point or a positive wire grounded point in the independent axis control circuit of the rescued train, the intermediate direct current link of the independent axis control circuit may be short-circuited, which causes a risk of burning out of the traction converter. Therefore, after the first isolation switch or the second isolation switch is connected to the wheelset of the rescue train, in the embodiment, the processor may further determine whether there is a negative wire grounded point or a positive wire grounded point based on a voltage of the intermediate direct current link of the independent axis control circuit selected based on the rescue power supply instruction, so as to determine whether there is a negative wire grounded point or a positive wire grounded point in the independent axis control circuit selected based on the rescue power supply instruction and the rescued train.

In the embodiment of the present disclosure, the first power supply isolation switch and the second power supply isolation switch in an independent axis control circuit among the second predetermined number of independent axis control circuits are controlled to be switched on in response to the rescue power supply instruction, to supply power to the rescued train through the independent axis control circuit selected based on the rescue power supply instruction, such that auxiliary loads of the rescued train can operate normally during the rescue towing process for the rescued train, thereby maintaining a comfortable environment of the fault train for passengers and relieving work pressure for the crew members and the driver, thus improving user experience and reducing the design cost.

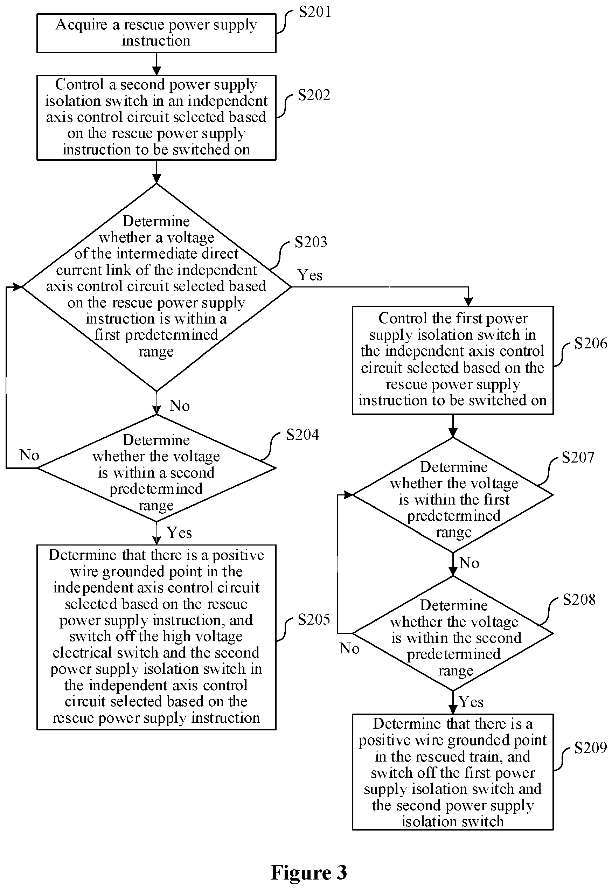

Based on the above embodiments, referring to Figure 3, Figure 3 is a flowchart of another power supply control method for train rescue according to an embodiment of the present disclosure. The method may include steps 201 to 209.

In step 201, a rescue power supply instruction is acquired. Step 201 is similar to step 101, and is not described in detail herein.

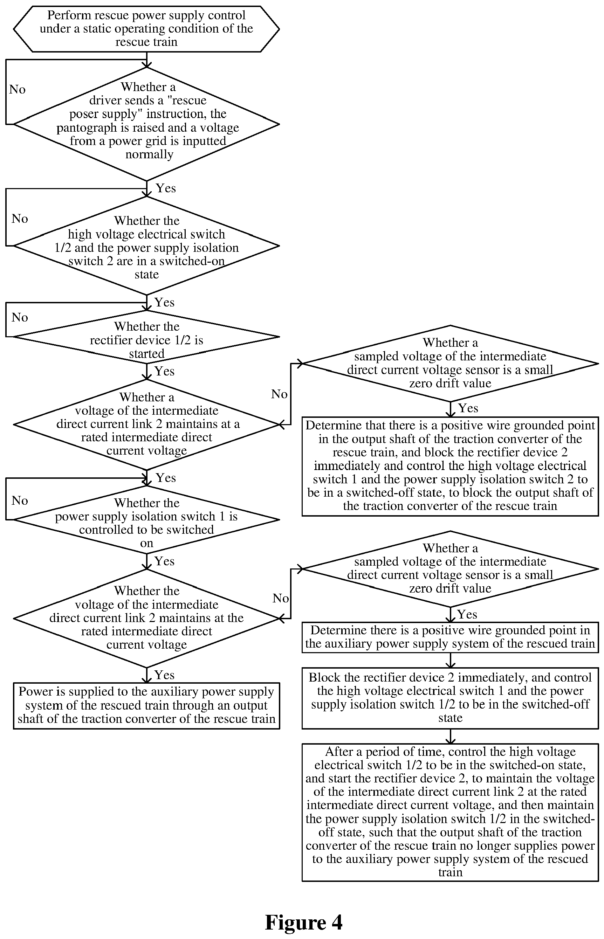

For the rescue train as shown in Figure 1, under a static operating condition, in a case that the positive wire of the intermediate direct current link 2 of the independent axis control circuit connected to an output shaft of the traction converter of the rescue train is connected to a corresponding interface of the fault train through a rescue power supply positive wire drawn from the power supply isolation switch 1 (the first power supply isolation switch), as shown in Figure 4, a driver may send the rescue power supply instruction to a processor, such as a DCU, through a human-machine interaction device. In addition, the driver in the rescue train may raise a pantograph of the traction transformer to supply power to a rescue train.

In step 202, a second power supply isolation switch of an independent axis control circuit selected based on the rescue power supply instruction is controlled to be switched on.

It is to be understood that, in the embodiment, an arrangement in which the second power supply isolation switch of the independent axis control circuit selected based on the rescue power supply instruction is connected to the wheelset of the rescue train is taken as an example, and an arrangement in which a first power supply isolation switch of the independent axis control circuit selected based on the rescue power supply instruction is connected to the wheelset of the rescue train may be similar to that of the embodiment, which is not limited in the embodiment.

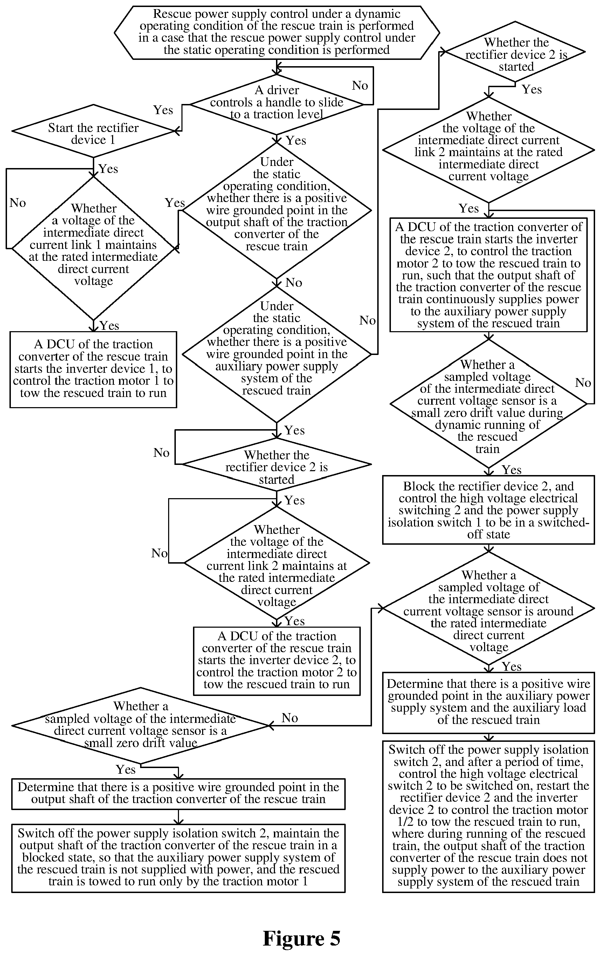

It is to be noted that the step may be performed to switch on the second power supply isolation switch of the independent axis control circuit selected based on the rescue power supply instruction to perform step 203 and step 204 to determine whether there is a positive wire grounded point in the independent axis control circuit before the first power supply isolation switch of the independent axis control circuit is switched on. In the embodiment, description is made by taking a case in which it is not determined whether there is a positive wire grounded point in the independent axis control circuit and the rescued train before the first power supply isolation switch is switched on, that is, a static operating condition as shown in Figure 4. For a case in which it is determined whether there is a positive wire grounded point in the independent axis control circuit and the rescued train before the first power supply isolation switch is switched on, a manner similar to that of the embodiment may be used to control the high voltage electrical switch, the first power supply isolation switch and the second power supply isolation switch of the independent axis control circuit, that is, a dynamic operating condition as shown in Figure 5. Whether the rescue train is under the static operating condition or the dynamic operating condition is not limited in the embodiment.

Before performing step 203, it is required to ensure that the pantograph of the traction transformer is raised, the high voltage electrical switch and the second power supply isolation switch of the independent axis control circuit selected based on the rescue power supply instruction are switched on and the rectifier device of the independent axis control circuit is started. Therefore, before performing step 202, if the pantograph of the traction transformer of the rescue train is raised, the high voltage electrical switch of the independent axis control circuit is switched on and the rectifier device is started, step 202 may be performed by only switching on the second power supply isolation switch of the independent axis control circuit as described in the embodiment. As shown in Figure 4, step 202 may include raising the pantograph of the traction transformer of the rescue train, switching on the high voltage electrical switch (the high voltage electrical switch 2) and the second power supply isolation switch (the power supply isolation switch) of the independent axis control circuit, and starting the rectifier device (the rectifier device 2). Figure 4 shows a case in which two rectifier devices (the rectifier device 1 and the rectifier device 2) in the CI are stared simultaneously, an object of the embodiment may also be realized by starting only the rectifier device in the independent axis control circuit. Whether two rectifier devices in the CI are stared or the rectifier device in the independent axis control circuit is started is not limited in the embodiment, as long as before performing step 103 it is ensured that the pantograph of the traction transformer is raised, the high voltage electrical switch and the second power supply isolation switch of the independent axis control circuit selected based on the rescue power supply instruction are switched on and the rectifier device of the independent axis control circuit is started.

In step 203, it is determined whether a voltage of the intermediate direct current link of the independent axis control circuit selected based on the rescue power supply instruction is within a first predetermined range. If the voltage of the intermediate direct current link of the independent axis control circuit selected based on the rescue power supply instruction is not within the first predetermined range, step 204 is performed. If the voltage of the intermediate direct current link of the independent axis control circuit selected based on the rescue power supply instruction is within the first predetermined range, step 206 is performed.

The voltage of the intermediate direct current link of the independent axis control circuit selected based on the rescue power supply instruction in step 203 may be collected by the intermediate direct current voltage sensor shown in Figure 1 or detected by another device. A device through which the voltage is acquired is not limited in the embodiment, as long as the voltage of the intermediate direct current link of the independent axis control circuit selected based on the rescue power supply instruction can be acquired.

It is to be noted that the first predetermined range in step 203 may be a range of a voltage under which the intermediate direct current link of the independent axis control circuit selected based on the rescue power supply instruction operates normally. The first predetermined range may be set by a designer based on a practical scenario and user requirements, for example, a range of a rated intermediate direct current voltage as shown in Figure 4, which is not limited in the embodiment.

It is to be understood that the independent axis control circuits in the rescue train in the embodiment may correspond to the same first predetermined range or different first predetermined ranges. That is, if the independent axis control circuit selected based on the rescue power supply instruction is switched to another independent axis control circuit, the first predetermined range in the step may be changed correspondingly.

In step 204, it is determined whether the voltage is within a second predetermined range. If the voltage is within the second predetermined range, step 205 is performed. If the voltage is not within the second predetermined range, step 203 is performed.

It is to be understood that the second predetermined range in step 204 may be a range of a voltage under which the intermediate direct current link of the independent axis control circuit selected based on the rescue power supply instruction is short-circuited. The first predetermined range may be set by a designer based on a practical scenario and user requirements, for example, a range of a small zero drift value as shown in Figure 4, which is not limited in the embodiment.

In step 205, it is determined that there is a positive wire grounded point in the independent axis control circuit selected based on the rescue power supply instruction, and the high voltage electrical switch and the second power supply isolation switch of the independent axis control circuit selected based on the rescue power supply instruction are switched off.

It is to be understood that, in step 205, it is determined that the voltage of the intermediate direct current link of the independent axis control circuit is within the second predetermined range in a case that the pantograph of the traction transformer is raised, the high voltage electrical switch and the second power supply isolation switch of the independent axis control circuit selected based on the rescue power supply instruction are switched on and the rectifier device of the independent axis control circuit is started. That is, in step 205, it may be determined that there is a positive wire grounded point in the independent axis control circuit selected based on the rescue power supply instruction, so that the high voltage electrical switch and the second power supply isolation switch of the independent axis control circuit selected based on the rescue power supply instruction are switched off to block the independent axis control circuit selected based on the rescue power supply instruction, that is, the independent axis control circuit selected based on the rescue power supply instruction is no longer used to supply power to the rescued train and the traction motor.

Further, the embodiment may further include a step of sending a rescue circuit switching instruction to a prompt device to prompt a user through a prompt device such as a display to switch the independent axis control circuit selected based on the rescue power supply instruction to another independent axis control circuit among the second predetermined number of independent axis control circuits. That is, the user may be prompted to connect a power supply wire that is connected to the rescued train to a first power supply isolation switch of another independent axis control circuit. If a first power supply isolation switch of each of the second predetermined number of independent axis control circuits is connected to the rescued train through one power supply wire interface, the processor may also automatically switch the independent axis control circuit selected based on the rescue power supply instruction to another independent axis control circuit. A way that the independent axis control circuit selected based on the rescue power supply instruction is switched to another independent axis control circuit is not limited in the embodiment.

For the rescue train as shown in Figure 1, under a static operating condition, as shown in Figure 4, in a case of detecting that a power grid supplies power normally, the DCU of the rescue train firstly controls the high voltage electrical switch 1, the high voltage electrical switch 2 and the power supply isolation switch 2 to be switched on, and the rectifying unit 1 and the rectifying unit 2 to be started, to maintain voltages of the intermediate direct current link 1 and the intermediate direct current link 2 at the rated intermediate direct current voltage. If a sampled voltage of the intermediate direct current voltage sensor is detected by the DCU as a small zero drift value, it is determined that there is a positive wire grounded point in an output shaft of the traction converter of the rescue train (under an operating condition that a negative wire of the output shaft is grounded, there is a positive wire grounded point in the output shaft, which indicates that the intermediate direct current link 2 is short-circuited under a high voltage input, resulting in a risk of burning out of the output shaft of the traction converter). In this case, the rectifier device 2 may be blocked immediately, and the high voltage electrical switch 1 and the power supply isolation switch 2 are controlled to be switched off, to block the output shaft of the traction converter.

In step 206, the first power supply isolation switch of the independent axis control circuit selected based on the rescue power supply instruction is controlled to be switched on.

It is to be understood that step 206 is performed after it is determined that there is no positive wire grounded point in the independent axis control circuit selected based on the rescue power supply instruction. In the step, the first power supply isolation switch of the independent axis control circuit selected based on the rescue power supply instruction is controlled to be switched on to supply power to the rescued train after it is determined whether the voltage of the intermediate direct current link of the independent axis control circuit is within the first predetermined range.

In step 207, it is determined whether the voltage is within the first predetermined range. If the voltage is not within the first predetermined range, step 208 is performed. Step 207 and step 208 are similar to step 203 and step 204 respectively, and are not described in detail herein.

It is to be understood that step 207 and step 208 may be performed to determine whether there is a positive wire grounded point in the rescued train in a case that the first power supply isolation switch of the independent axis control circuit selected based on the rescue power supply instruction is switched on. In a case that the voltage is within the first predetermined range, it may be determined that there is no positive wire grounded point in the rescued train and the independent axis control circuit selected based on the rescue power supply instruction, and step 206 may be performed, so that the independent axis control circuit selected based on the rescue power supply instruction maintains to supply power to the rescued train.

It is to be noted that the object of the embodiment may also be realized by directly performing step 208 without performing step 207 to determine whether the voltage is within the second predetermined range. If the voltage is not within the second predetermined range, step 206 is performed, so that the independent axis control circuit selected based on the rescue power supply instruction maintains to supply power to the rescued train. If the voltage is within the second predetermined range, step 209 is performed.

In step 208, it is determined whether the voltage is within the second predetermined range. If the voltage is within the second predetermined range, step 209 is performed. If the voltage is not within the second predetermined range, step 207 is performed.

In step 209, it is determined that there is a positive wire grounded point in the rescued train, and the first power supply isolation switch and the second power supply isolation switch are switched off.

In the embodiment, a case that step 206 is performed for the first time in a case that the first power supply isolation switch in the independent axis control circuit selected based on the rescue power supply instruction is controlled to be switched on is taken as an example, that is, if the voltage of the intermediate direct current link of the independent axis control circuit is within the second predetermined range, it may be determined that there is a positive wire grounded point in the rescued train. In this case, the first power supply isolation switch and the second power supply isolation switch are switched off, to stop the independent axis control circuit supplying power to the rescued train.

It is to be noted that in step 209, the first power supply isolation switch and the second power supply isolation switch may be switched off in the following manners. The first power supply isolation switch and second power supply isolation switch that are in a switched on state may be directly switched off, and the first power supply isolation switch and the second power supply isolation switch maintains in a switched off state. Alternatively, the rectifier device of the independent axis control circuit may be blocked, and the high voltage electrical switch, the first power supply isolation switch and the second power supply isolation switch of the independent axis control circuit that are in the switched on state may be switched off firstly, after a predetermined period of time, the rectifier device of the independent axis control circuit is started, the high voltage electrical switch of the independent axis control circuit is switched on, and the first power supply isolation switch and the second power supply isolation switch maintains in the switched off state. A manner in which the first power supply isolation switch and the second power supply isolation switch are switched off is not limited in the embodiment, as long as the first power supply isolation switch and the second power supply isolation switch in the independent axis control circuit can be switched off to stop the independent axis control circuit supplying power to the rescued train.

For the rescue train as shown in Figure 1, under a static operating condition, as shown in Figure 4, in a case of detecting that a power grid supplies power normally, the DCU of the rescue train firstly controls the high voltage electrical switch 1, the high voltage electrical switch 2 and the power supply isolation switch 2 to be switched on, the rectifying unit 1 and the rectifying unit 2 to be started, to maintain voltages of the intermediate direct current link 1 and the intermediate direct current link 2 at the rated intermediate direct current voltage. If a sampled voltage of the intermediate direct current voltage sensor is detected by the DCU as being around the rated intermediate direct current voltage, the power supply isolation switch 1 is controlled to be switched on. In a case that the auxiliary system of the rescued train is supplied with power, if a sampled voltage of the intermediate direct current voltage sensor is detected by the DCU as a small zero drift value, it is determined that a positive wire grounded point is introduced after the output shaft of the traction converter of the rescue train supplies power to the auxiliary power supply system of the rescued train, and the grounded point is located in the auxiliary power supply system of the rescued train (in a case that a negative wire of output shaft is grounded, a positive wire grounded point is introduced when the output shaft supplies power to the auxiliary power supply system of the rescued train, which indicates that the intermediate direct current link 2 is short-circuited under a high voltage input, resulting in a risk of burning out of the output shaft of the traction converter). In this case, the rectifying unit 2 is blocked immediately, and the high voltage electrical switch 1, the power supply isolation switch 1 and power supply isolation switch 2 are controlled to be switched off. After a period of time T, the DCU controls the high voltage electrical switch 1 and the high voltage electrical switch 2 to be in the switched on state, and start the rectifying unit 2, to maintain the voltage of the intermediate direct current link 2 at the rated intermediate direct current voltage, so that the high voltage electrical switch 1 and the high voltage electrical switch 2 maintains in switched off state. In this case, the output shaft of the traction converter of the rescue train is no longer supply power to the auxiliary power supply system of the rescued train and only provides a power supply input for starting the inverter unit 2 to control the traction motor to tow the rescue train.

It is to be understood that if step 206 is performed in a predetermined period of time after the first power supply isolation switch of the independent axis control circuit selected based on the rescue power supply instruction is switched on, a positive wire grounded point may be introduced in the independent axis control circuit during a process in which the independent axis control circuit supplies power to the rescued train. Therefore, in the step, it cannot be directly determined that there is a positive wire grounded point in the rescued train. In the step, a position of the positive wire grounded point may be determined in a manner similar to that of the above steps. For example, in this embodiment, the process may include: switching off the high voltage electrical switch, the first power supply isolation switch and the second power supply isolation switch; switching on the high voltage electrical switch and the second power supply isolation switch after a predetermined period of time; determining whether the voltage is within the first predetermined range; determining that there is a positive wire grounded point in the rescued train if the voltage is within the first predetermined range and switching off the second power supply isolation switch; determining whether the voltage is within the second predetermined range if the voltage is not within the first predetermined range; determining that there is a positive grounded point in the independent axis control circuit selected based on the rescue power supply instruction if the voltage is within the second predetermined range, and switching off the high voltage electrical switch and the second power supply isolation switch.

In the embodiment of the present disclosure, by determining whether the voltage of the intermediate direct current link of the independent axis control circuit selected based on the rescue power supply instruction is within the first predetermined range and determining whether the voltage is within the second predetermined range, it is determined whether there is a positive wire grounded point in the rescue train and the rescued train and automatical control is performed, so that a risk of burning out of the traction converter caused by the positive wire grounded point can be avoided in a case that a negative wire of the traction converter of the rescue train is grounded while maintaining the rescue power supply, thereby improving user experience.

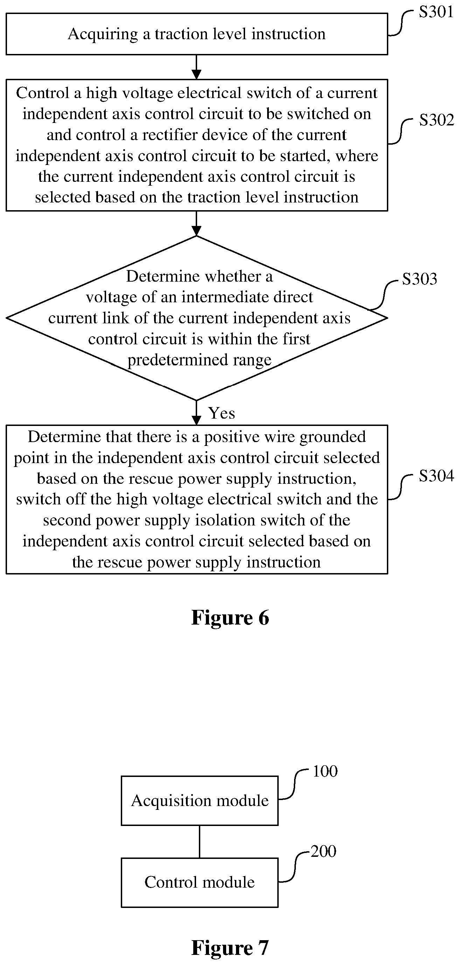

Based on the above embodiments, referring to Figure 6, Figure 6 is a flowchart of another power supply control method for train rescue according to an embodiment of the present disclosure. The method may include steps 301 to 304.

In step 301, a traction level instruction is acquired.

The traction level instruction in the step may be an instruction of supplying power to a traction motor. The instruction is sent to a processor such as the DCU by a user through controlling a handle of the rescue train.

In step 302, a high voltage electrical switch of a current independent axis control circuit is controlled to be switched on and a rectifier device of the current independent axis control circuit is controlled to be started. The current independent axis control circuit is one of independent axis control circuits that is selected based on the traction level instruction.

It is to be understood that step 302 is described by taking a case that the DCU controls one of the independent axis control circuits that is selected based on the traction level instruction is taking as an example, and the DCU may controls each of the independent axis control circuits that is selected based on the traction level instruction in the same or similar manner to that of the embodiment, which is not limited in the embodiment.

Correspondingly, if the high voltage electrical switch of the current independent axis control circuit cannot be switched on or the rectifier device of the current independent axis control circuit cannot be started, the current independent axis control circuit cannot supply power to a traction motor connected to the current independent axis control circuit.

It is to be noted that if the current independent axis control circuit is the independent axis control circuit selected based on the rescue power supply instruction in the above embodiments and it is determined that there is a positive wire grounded point in the current independent axis control circuit before the traction level instruction is acquired, that is, under the static operating condition of the rescue train, the present process may be directly ended and the current independent axis control circuit maintains in a blocked state.

In step 303, it is determined whether a voltage of an intermediate direct current link of the current independent axis control circuit is within the first predetermined range. If the voltage of the intermediate direct current link of the current independent axis control circuit is within the first predetermined range, step 304 is performed.

It is to be understood that step 303 is performed in order to perform step 304 in a case that the voltage of the intermediate direct current link of the current independent axis control circuit is within the first predetermined range to start the inverter device of the current independent axis control circuit, so as to supply power to the traction motor connected to the inverter device of the current independent axis control circuit. In a case that the voltage of the intermediate direct current link of the current independent axis control circuit is not within the first predetermined range, step 303 may be performed once again to determine whether the voltage of the intermediate direct current link of the current independent axis control circuit is within the first predetermined range, or the high voltage electrical switch of the current independent axis control circuit may be switched off after a period of time and the rectifier device of the current independent axis control circuit may be blocked, so that the power supply from the current independent axis control circuit to the traction motor connected to the inverter device of the current independent axis control circuit is not performed. An operation performed in a case that the voltage of the intermediate direct current link of the current independent axis control circuit is not within the first predetermined range is not limited in the embodiment.

In step 304, the inverter device of the current independent axis control circuit is started to supply power to the traction motor connected to the inverter device of the current independent axis control circuit.

It is to be noted that a case that the rescue train starts the traction motor under a static operating condition is described as an example in the embodiment. If the current independent axis control circuit is not the independent axis control circuit selected based on the rescue power supply instruction in the above embodiments, the inverter device of the current independent axis control circuit may be directly started in step 304 to supply power to the traction motor connected to the inverter device of the current independent axis control circuit. If the current independent axis control circuit is the independent axis control circuit selected based on the rescue power supply instruction in the above embodiments and the rescued train is supplied with power with the method according to the above embodiment under the static operating condition before the dynamic operating condition, the method according to the embodiment may be as shown in Figure 5.

In a case that there is no positive wire grounded point in the output shaft of the traction converter of the rescue train (the current independent axis control circuit) and the rescued train under the dynamic operating condition, if there is no positive wire grounded point in the output shaft of the traction converter of the rescue train and the auxiliary power supply system of the rescued train under the static operating condition, the output shaft of the traction converter of the rescue train maintains to supply power to the auxiliary power supply system of the rescued train. After the driver applies a traction level by controlling the handle, the DCU of the traction converter of the rescue train starts the inverter device 1 and the inverter device 2 to control the traction motor 1 and the traction motor 2 to tow the rescued train to run. During running of the rescued train, the output shaft of the traction converter of the rescue train maintains supplying power to the auxiliary power supply system of the rescued train.

In a case that there is a positive wire grounded point in the output shaft of the traction converter of the rescue train or the auxiliary power supply system of the rescued train under the dynamic operating condition, if there is a positive wire grounded point in the traction converter of the rescue train under the static operating condition, the DCU of the traction converter of the rescue train blocks the output shaft of the traction converter. After the driver applies the traction level by controlling the handle, the DCU of the traction converter of the rescue train starts the inverter device 1 to control the traction motor 1 to tow the rescued train to run. During running of the rescued train, the output shaft of the traction converter of the rescue train maintains in the blocked state. That is, both an operation of starting the inverter device 2 to control the traction converter 2 to tow the rescued train to run and an operation of supplying power to the auxiliary power supply system of the rescued train are not performed.

If there is a positive wire grounded point in the auxiliary power supply system of the rescued train under the static operating condition, the output shaft of the traction converter of the rescue train does not supply power to the auxiliary power supply system of the rescued train. The driver controls the handle, and the DCU of the traction converter of the rescue train starts the inverter device 1 and the inverter device 2 to control the traction motor 1 and the traction motor 2 to tow the rescued train to run. During running of the rescued train, the output shaft of the traction converter of the rescue train does not supply power to the auxiliary power supply system of the rescued train.

If there is no positive wire grounded point in the output shaft of the traction converter of the rescue train and the auxiliary power supply system of the rescued train under the static operating condition, the output shaft of the traction converter of the rescue train maintains to supply power to the auxiliary power supply system of the rescued train. After the driver applies the traction level by controlling the handle, the DCU of the traction converter of the rescue train starts the inverter device 1 and the inverter device 2 to control the traction motor 1 and the traction motor 2 to tow the rescued train to run, and the output shaft of the traction converter of the rescue train maintains supplying power to the auxiliary power supply system of the rescued train. During running of the rescued train, if a sampled voltage of the intermediate direct current voltage sensor is detected by the DCU as a small zero drift value, it is determined that there is appositive wire grounded point in a power supply circuit between the output shaft of the traction converter of the rescue train and the auxiliary load of the rescued train (a positive wire grounded point is formed between the output shaft of the traction converter and the auxiliary load of the rescued train in a case that a negative wire of the output shaft of the traction converter is grounded, this indicates that the intermediate direct current link 2 is short-circuited under a high voltage input, which results in a risk of burning out of the output shaft of the traction converter). In this case, the rectifier device 2 may blocked immediately, and the high voltage electrical switch 2 and the power supply isolation switch 1 may be controlled to be switched off. In this case, a positive wire grounded point is may be determined in the following two cases. In a case that the sampled voltage of the intermediate direct current voltage sensor is detected by the DCU as being around the rated intermediate direct current voltage (the first predetermined range), it is determined that there is a positive wire grounded point in the rescued train, and the power supply isolation switch 2 is switched off (the negative wire of the output shaft of the traction converter of the rescue train disconnected from the ground). After a period of time T, the high voltage electrical switch 2 is controlled to be switched off, and the rectifier device 2 and the inverter device 2 are restarted to control the traction motor 1 and the traction motor 2 to tow the rescued train to run. During running of the rescued train, the output shaft of the traction converter of the rescue train does not supply power to the auxiliary power supply system of the rescued train. In a case that the sampled voltage of the intermediate direct current voltage sensor is detected by the DCU as a small zero drift value (the second predetermined value), it is determined that there is a positive wire grounded point in the output shaft of the traction converter of the rescue train, the power supply isolation switch 2 is switched off, and the output shaft of the traction converter of the rescue train maintains in the blocked state, so that the output shaft of the traction converter of the rescue train does not supply power to the auxiliary power supply system of the rescued train, and the rescued train is towed by another traction motor (the traction motor 1).

In the embodiment of the present disclosure, the rescue train supplies power to the rescued train under the dynamic operating condition, thereby improving user experience.

Referring to Figure 7, Figure 7 is a structural diagram of a power supply control device for train rescue according to an embodiment of the present disclosure. The device is applied to a rescue train including the power supply circuit for train rescue as described in the above embodiments. The device may include an acquisition module 100 and a control module 200. The acquisition module 100 is configured to acquire a rescue power supply instruction. The control module 200 is configured to control, in response to the rescue power supply instruction, a first power supply isolation switch and a second power supply isolation switch in an independent axis control circuit among the second predetermined number of independent axis control circuits to be switched on, so as to supply power to the recued train through the independent axis control circuit selected based on the rescue power supply instruction.

In an embodiment, in a case that an end of the second power supply isolation switch of the independent axis control circuit selected based on the rescue power supply instruction is connected to a wheelset, the control module 200 may include a first control submodule, a first determination submodule, a second control submodule, a second determination submodule, and a third control submodule. The first control submodule is configured to control a second power supply isolation switch of an independent axis control circuit selected based on the rescue power supply instruction to be switched on. The first determination submodule is configured to determine whether a voltage of the intermediate direct current link of the independent axis control circuit selected based on the rescue power supply instruction is within a first predetermined range. The second control submodule is configured to control, if the voltage is within the first predetermined range, the first power supply isolation switch of the independent axis control circuit selected based on the rescue power supply instruction to be switched on. The second determination submodule is configured to determine whether the voltage is within the second predetermined range if the voltage is not within the first predetermined range. The third control submodule is configured to determine that there is a positive wire grounded point in the independent axis control circuit selected based on the rescue power supply instruction if the voltage is within the second predetermined range and switch off the high voltage electrical switch and the second power supply isolation switch of the independent axis control circuit selected based on the rescue power supply instruction.

In an embodiment, the control module 200 may further include a third determination submodule, a fourth determination submodule and a fifth control submodule. The third determination submodule is configured to determine whether the voltage is within the first predetermined range. The fourth determination submodule is configured to determine whether the voltage is within the second predetermined range if the voltage is not within the first predetermined range. The fifth control submodule is configured to determine that there is a positive wire grounded point in the rescued train if the voltage is within the second predetermined range and switch off the first power supply isolation switch and the second power supply isolation switch.

In an embodiment, the fifth control submodule may include a first control unit, a first determination unit, a second control unit, a second determination unit and a third control unit. The first control unit is configured to switch off the high voltage electrical switch, the first power supply isolation switch and the second power supply isolation switch. The first determination unit is configured to switch on the high voltage electrical switch and the second power supply isolation switch after a predetermined period of time and determine whether the voltage is within the first predetermined range. The second control unit is configured to determine that there is a positive wire grounded point in the rescued train if the voltage is within the first predetermined range and switch off the second power supply isolation switch. The second determination unit is configured to determine whether the voltage is within the second predetermined range if the voltage is not within the first predetermined range. The third control unit is configured to determine that there is a positive grounded point in the independent axis control circuit selected based on the rescue power supply instruction if the voltage is within the second predetermined range and switch off the high voltage electrical switch and the second power supply isolation switch.

In an embodiment, the device may further include a sending module. The sending module is configured to send a rescue circuit switching instruction to a prompt device to prompt a user to switch the independent axis control circuit to another independent axis control circuit among the second predetermined number of independent axis control circuits.

In an embodiment, the device may further include a traction acquisition module, a first traction control module, a traction determination module and a second traction control module. The traction acquisition module is configured to acquire a traction level instruction. The first traction control module is configured to control a high voltage electrical switch of a current independent axis control circuit to be switched on and control a rectifier device of the current independent axis control circuit to be started. The current independent axis control circuit is one of current independent axis control circuits that is selected based on the traction level instruction. The traction determination module is configured to determine whether a voltage of an intermediate direct current link of the current independent axis control circuit is within the first predetermined range. The second traction control module is configured to start the inverter device of the current independent axis control circuit if the voltage is within the first predetermined range to supply power to the traction motor connected to the inverter device of the current independent axis control circuit.

In the embodiment of the present disclosure, the control module 200 controls, in response to the rescue power supply instruction, the first power supply isolation switch and the second power supply isolation switch in a corresponding independent axis control circuit among the second predetermined number of independent axis control circuits to be switched on, so as to supply power to the rescued train through the independent axis control circuit selected based on the rescue power supply instruction. In this way, auxiliary loads of the rescued train can operate normally during a rescue towing process for the rescued train, thereby maintaining a comfortable environment of the fault train for passengers and relieving work pressure for the crew members and the driver, thus improving user experience and reducing the design cost.

The embodiments in this specification are described in a progressive way. Each of the embodiments emphasizes the differences from others. For the same or similar parts among the embodiments, one may refer to description of other embodiments. Since the device disclosed in the embodiments corresponds to the method disclosed in the embodiments, the description of the device embodiments is relatively simple. For relevant matters, one may refer to the description of the method embodiments.

It is to be further understood by those skilled in the art that units described in combination with the disclosed embodiments may be implemented by electronic hardware, computer software or a combination thereof. In order to clearly describe interchangeability of the hardware and the software, the units are generally described above based on functions. Whether the functions are realized by the hardware or the software is determined by specific applications of the technical solutions and design constraints. For each of the specific applications, those skilled in the art may adopt a specific implementation to realize the functions described above, and the implementation should fall within the scope of the present disclosure.

In combination with the embodiments herein, steps of the method or algorithm described may be directly implemented using hardware, a software module executed by a processor, or the combination thereof. The software module can be embedded in a random access memory (RAM), an internal storage, a read only memory (ROM), an electrically programmable ROM, an electrically erasable programmable ROM, a register, a hard disk, a removable disk, a CD-ROM or any other form of storage medium known in the art.

The power supply circuit for train rescue, the power supply control method for train rescue and the power supply control device for train rescue according to the present disclosure are described above. Examples are used in the present disclosure to explain the principles and the embodiments of the present disclosure. Descriptions of the above embodiments are only used to assist a reader in understanding the method and the core idea of the present disclosure. It is to be noted that those skilled in the art may make various variations and modifications to the present disclosure without departing from the principles of the present disclosure. The variations and modifications fall within the protection scope of the claims of the present disclosure.

## Claims

1. A power supply circuit for train rescue, wherein the power supply circuit is arranged in a rescue train and comprises: a traction transformer (10), traction motors (40), and a converter inverter (30) comprising a first predetermined number of independent axis control circuits (20), wherein
for each of the first predetermined number of independent axis control circuits (20), an input terminal of the independent axis control circuit (20) is connected to a secondary winding of a traction transformer (10) corresponding to the independent axis control circuit (20), and an output terminal of the independent axis control circuit (20) is connected to a traction motor (40) corresponding to the independent axis control circuit (20),
each of a second predetermined number of independent axis control circuits (20) in the first predetermined number of independent axis control circuits (20) comprises:
a first power supply isolation switch (21) configured to connect a positive wire of an intermediate direct current link of the independent axis control circuit (20) to a rescued train or disconnect the positive wire from the rescued train, wherein the second predetermined number is less than or equal to the first predetermined number; and
a second power supply isolation switch (22) configured to connect a negative wire of the intermediate direct current link of the independent axis control circuit (20) to the rescued train or disconnect the negative wire from the rescued train.

2. The power supply circuit for train rescue according to claim 1, wherein each of the first predetermined number of independent axis control circuits (20) comprises:
a high voltage electrical switch connected to a secondary winding of the traction transformer (10) corresponding to the independent axis control circuit (20) and configured to input or isolate a supply voltage that is obtained by reducing a voltage of a power grid through the traction transformer (10);
a rectifier device connected to the high voltage electrical switch and configured to rectify the supply voltage to obtain a direct current voltage;
an intermediate direct current link connected to the rectifier device and configured to output and store electrical energy of the independent axis control circuit (20); and
an inverter device connected to the intermediate direct current link and configured to invert the direct current voltage in the intermediate direct current link to obtain an alternating current voltage, so as to supply power to a traction motor (40) connected to the independent axis control circuit (20).

3. The power supply circuit for train rescue according to claim 1, wherein a first end of the second power supply isolation switch is connected to a negative wire of an intermediate direct current link of the independent axis control circuit (20) where the second power supply isolation switch is arranged, and a second end of the second power supply isolation switch is connected to a wheelset of the rescue train.

4. The power supply circuit for train rescue according to claim 1, wherein each of the second predetermined number of independent axis control circuits (20) comprises
an intermediate direct current voltage sensor configured to detect a voltage of an intermediate direct current link of the independent axis control circuit (20).

5. A power supply control method for train rescue, wherein the power supply control method is applied to a rescue train comprising the power supply circuit for train rescue according to any one of claims 1 to 4, and the power supply control method comprises:
acquiring a rescue power supply instruction (S101, S201); and
controlling (S 102), in response to the rescue power supply instruction, a first power supply isolation switch and a second power supply isolation switch in an independent axis control circuit selected based on the rescue power supply instruction among the second predetermined number of independent axis control circuits to be switched on, to supply power to the recued train through the independent axis control circuit selected based on the rescue power supply instruction.

6. The power supply control method for train rescue according to claim 5, wherein in a case that an end of the second power supply isolation switch of the independent axis control circuit selected based on the rescue power supply instruction is connected to a wheelset, the controlling, in response to the rescue power supply instruction, a first power supply isolation switch and a second power supply isolation switch in an independent axis control circuit selected based on the rescue power supply instruction among the second predetermined number of independent axis control circuits to be switched on comprises:
controlling (S202) the second power supply isolation switch of the independent axis control circuit selected based on the rescue power supply instruction to be switched on;
determining (S203) whether a voltage of the intermediate direct current link of the independent axis control circuit selected based on the rescue power supply instruction is within a first predetermined range; and
controlling (S206), if the voltage of the intermediate direct current link of the independent axis control circuit selected based on the rescue power supply instruction is within the first predetermined range, the first power supply isolation switch of the independent axis control circuit selected based on the rescue power supply instruction to be switched on, wherein
if the voltage of the intermediate direct current link of the independent axis control circuit selected based on the rescue power supply instruction is not within the first predetermined range, it is determined whether the voltage is within a second predetermined range (S204), and
if the voltage is within the second predetermined range, it is determined that there is a positive wire grounded point in the independent axis control circuit selected based on the rescue power supply instruction, and the high voltage electrical switch and the second power supply isolation switch of the independent axis control circuit selected based on the rescue power supply instruction switching off (S205).

7. The power supply control method for train rescue according to claim 6, wherein after the controlling the first power supply isolation switch of the independent axis control circuit selected based on the rescue power supply instruction to be switched on, the method further comprises:
determining (S207) whether the voltage is within the first predetermined range;
determining (S208), if the voltage is not within the first predetermined range, whether the voltage is within the second predetermined range; and
determining (S209), if the voltage is within the second predetermined range, that there is a positive wire grounded point in the rescued train and switching off the first power supply isolation switch and the second power supply isolation switch.

8. The power supply control method for train rescue according to claim 6, wherein after the determining that there is a positive wire grounded point in the independent axis control circuit selected based on the rescue power supply instruction, the method further comprises:
sending a rescue circuit switching instruction to a prompt device to prompt a user to switch the independent axis control circuit to another independent axis control circuit among the second predetermined number of independent axis control circuits.

9. The power supply control method for train rescue according to any one of claims 5 to 8, further comprising:
acquiring a traction level instruction;
controlling a high voltage electrical switch of a current independent axis control circuit to be switched on and controlling a rectifier device of the current independent axis control circuit to be started, wherein the current independent axis control circuit indicates one of the independent axis control circuits that is selected based on the traction level instruction.
determining whether a voltage of an intermediate direct current link of the current independent axis control circuit is within the first predetermined range; and
starting, if the voltage is within the first predetermined range, an inverter device of the current independent axis control circuit, to supply power to a traction motor that is connected to the inverter device of the current independent axis control circuit.

10. A power supply control device for train rescue, wherein the power supply control device comprises the power supply circuit for train rescue according to any one of claims 1 to 4, and the power supply control device comprises:
an acquisition module (100) configured to acquire a rescue power supply instruction; and
a control module (200) configured to control, in response to the rescue power supply instruction, a first power supply isolation switch and a second power supply isolation switch in an independent axis control circuit selected based on the rescue power supply instruction among the second predetermined number of independent axis control circuits to be switched on, to supply power to a recued train through the independent axis control circuit selected based on the rescue power supply instruction.

## Patentansprüche

1. Stromversorgungsschaltung zur Zugrettung, wobei die Stromversorgungsschaltung in einem Rettungszug angeordnet ist und umfasst: einen Traktionstransformator (10), Traktionsmotoren (40) und einen Umrichter/Wechselrichter (30), umfassend eine erste vorgegebene Anzahl unabhängiger Achsensteuerschaltungen (20), wobei
für jede der ersten vorgegebenen Anzahl von unabhängigen Achsensteuerschaltungen (20) ein Eingangsanschluss der unabhängigen Achsensteuerschaltung (20) mit einer Sekundärwicklung eines Traktionstransformators (10) verbunden ist, der der unabhängigen Achsensteuerschaltung (20) entspricht, und ein Ausgangsanschluss der unabhängigen Achsensteuerschaltung (20) mit einem Traktionsmotor (40) verbunden ist, der der unabhängigen Achsensteuerschaltung (20) entspricht,
jede einer zweiten vorgegebenen Anzahl unabhängiger Achsensteuerschaltungen (20) in der ersten vorgegebenen Anzahl unabhängiger Achsensteuerschaltungen (20) umfasst:
einen ersten Stromversorgungstrennschalter (21), dazu konfiguriert, einen Plusdraht einer Zwischengleichstromverbindung der unabhängigen Achsensteuerschaltung (20) mit einem geretteten Zug zu verbinden oder den Plusdraht von dem geretteten Zug zu trennen, wobei die zweite vorgegebene Zahl kleiner oder gleich der ersten vorgegebenen Zahl ist; und
einen zweiten Stromversorgungstrennschalter (22), dazu konfiguriert, einen Minusdraht der Zwischengleichstromverbindung der unabhängigen Achsensteuerschaltung (20) mit dem geretteten Zug zu verbinden oder den Minusdraht von dem geretteten Zug zu trennen.

2. Stromversorgungsschaltung zur Zugrettung nach Anspruch 1, wobei jede der ersten vorgegebenen Anzahl von unabhängigen Achsensteuerschaltungen (20) umfasst:
einen Hochspannungsschalter, verbunden mit einer Sekundärwicklung des Traktionstransformators (10), der der unabhängigen Achsensteuerschaltung (20) entspricht, und dazu konfiguriert, eine Versorgungsspannung anzulegen oder zu isolieren, die erhalten wird durch Verringern einer Spannung eines Stromnetzes durch den Traktionstransformator (10);
eine Gleichrichtervorrichtung, verbunden mit dem elektrischen Hochspannungsschalter und dazu konfiguriert, die Versorgungsspannung gleichzurichten, um eine Gleichspannung zu erhalten;
eine Zwischengleichstromverbindung, verbunden mit der Gleichrichtervorrichtung und dazu konfiguriert, elektrische Energie der unabhängigen Achsensteuerschaltung (20) auszugeben und zu speichern; und
eine Wechselrichtervorrichtung, verbunden mit der Zwischengleichstromverbindung und dazu konfiguriert, die Gleichspannung in der Zwischengleichstromverbindung umzuwandeln, um eine Wechselspannung zu erhalten, um einen Traktionsmotor (40) mit Strom zu versorgen, der mit der unabhängigen Achsensteuerschaltung (20) verbunden ist.

3. Stromversorgungsschaltung zur Zugrettung nach Anspruch 1, wobei ein erstes Ende des zweiten Stromversorgungstrennschalters mit einem Minusdraht einer Zwischengleichstromverbindung der unabhängigen Achsensteuerschaltung (20) verbunden ist, an der der zweite Stromversorgungstrennschalter angeordnet ist, und ein zweites Ende des zweiten Stromversorgungstrennschalters mit einem Radsatz des Rettungszuges verbunden ist.

4. Stromversorgungsschaltung zur Zugrettung nach Anspruch 1, wobei jede der zweiten vorgegebenen Anzahl von unabhängigen Achsensteuerschaltungen (20)
einen Zwischengleichspannungssensor umfasst, dazu konfiguriert, eine Spannung einer Zwischengleichstromverbindung der unabhängigen Achsensteuerschaltung (20) zu erkennen.

5. Stromversorgungssteuerverfahren zur Zugrettung, wobei das Stromversorgungssteuerverfahren auf einen Rettungszug angewendet wird, umfassend die Stromversorgungsschaltung zur Zugrettung nach einem der Ansprüche 1 bis 4, und das Stromversorgungssteuerverfahren umfasst:
Erfassen einer Rettungsstromversorgungsanweisung (S101, S201); und
Steuern (S102), als Reaktion auf die Rettungsstromversorgungsanweisung, eines ersten Stromversorgungstrennschalters und eines zweiten Stromversorgungstrennschalters in einer unabhängigen Achsensteuerschaltung, die basierend auf der Rettungsstromversorgungsanweisung ausgewählt wurde, aus der zweiten vorgegebenen Anzahl von unabhängigen Achsensteuerschaltungen, die einzuschalten sind, um den geretteten Zug über die unabhängige Achsensteuerschaltung mit Strom zu versorgen, die basierend auf der Rettungsstromversorgungsanweisung ausgewählt worden ist.

6. Stromversorgungssteuerverfahren zur Zugrettung nach Anspruch 5, wobei in einem Fall, in dem ein Ende des zweiten Stromversorgungstrennschalters der unabhängigen Achsensteuerschaltung, die basierend auf der Rettungsstromversorgungsanweisung ausgewählt worden ist, mit einem Radsatz verbunden ist, das Steuern, als Reaktion auf die Rettungsstromversorgungsanweisung, eines ersten Stromversorgungstrennschalters und eines zweiten Stromversorgungstrennschalters in einer unabhängigen Achsensteuerschaltung, die basierend auf der Rettungsstromversorgungsanweisung ausgewählt wurde, aus der zweiten vorgegebenen Anzahl von unabhängigen Achsensteuerschaltungen, die einzuschalten sind, umfasst:
Steuern (S202) des zweiten Stromversorgungstrennschalters der unabhängigen Achsensteuerschaltung, der basierend auf der Rettungsstromversorgungsanweisung zum Einschalten ausgewählt worden ist;
Bestimmen (S203), ob eine Spannung der Zwischengleichstromverbindung der unabhängigen Achsensteuerschaltung, die basierend auf der Rettungsstromversorgungsanweisung ausgewählt worden ist, innerhalb eines ersten vorgegebenen Bereichs liegt; und
Steuern (S206), wenn eine Spannung der Zwischengleichstromverbindung der unabhängigen Achsensteuerschaltung, die basierend auf der Rettungsstromversorgungsanweisung ausgewählt worden ist, innerhalb des ersten vorgegebenen Bereichs liegt, des ersten Stromversorgungstrennschalters der unabhängigen Achsensteuerschaltung, der basierend auf der Rettungsstromversorgungsanweisung zum Einschalten ausgewählt worden ist; wobei
wenn die Spannung der Zwischengleichstromverbindung der unabhängigen Achsensteuerschaltung, die basierend auf der Rettungsstromversorgungsanweisung ausgewählt worden ist, nicht innerhalb des ersten vorgegebenen Bereichs liegt, bestimmt wird, ob die Spannung in einem zweiten vorgegebenen Bereich liegt (S204), und
wenn die Spannung in dem zweiten vorgegebenen Bereich liegt, bestimmt wird, dass ein Pluspol-Erdungspunkt in der nach der Rettungsstromversorgungsanweisung ausgewählten unabhängigen Achsensteuerschaltung vorliegt, und der Hochspannungsschalter und der zweite Stromversorgungstrennschalter der unabhängigen Achsensteuerschaltung, der basierend auf der Rettungsstromversorgungsanweisung ausgewählt worden ist, abschalten (S205).

7. Stromversorgungssteuerverfahren zur Zugrettung nach Anspruch 6, wobei nach dem Steuern des ersten Stromversorgungstrennschalters der unabhängigen Achsensteuerschaltung, der basierend auf der Rettungsstromversorgungsanweisung zum Einschalten ausgewählt worden ist, das Verfahren ferner umfasst:
Bestimmen (S207), ob die Spannung innerhalb des ersten vorgegebenen Bereichs liegt;
Bestimmen (S208), wenn die Spannung nicht innerhalb des ersten vorgegebenen Bereichs liegt, ob die Spannung innerhalb des zweiten vorgegebenen Bereichs liegt; und
Bestimmen (S209), wenn die Spannung innerhalb des zweiten vorgegebenen Bereichs liegt, dass im geretteten Zug ein Pluspol-Erdungspunkt vorliegt, und Ausschalten des ersten Stromversorgungstrennschalters und des zweiten Stromversorgungstrennschalters.

8. Stromversorgungssteuerverfahren zur Zugrettung nach Anspruch 6, wobei nach dem Bestimmen, dass ein Pluspol-Erdungspunkt in der unabhängigen Achsensteuerschaltung, der basierend auf der Rettungsstromversorgungsanweisung ausgewählt worden ist, das Verfahren ferner umfasst:
Senden einer Rettungsschaltungsumschaltanweisung an eine Eingabeaufforderungsvorrichtung, um einen Benutzer dazu aufzufordern, die unabhängigen Achsensteuerschaltung auf eine andere unabhängige Achsensteuerschaltung aus der zweiten vorgegebenen Anzahl von unabhängigen Achsensteuerschaltungen umzuschalten.

9. Stromversorgungssteuerverfahren zur Zugrettung nach einem der Ansprüche 5 bis 8, ferner umfassend:
Erfassen einer Traktionsstufenanweisung;
Steuern eines Hochspannungsschalters einer stromunabhängigen Achsensteuerschaltung, sodass er eingeschaltet wird, und Steuern einer Gleichrichtervorrichtung der stromunabhängigen Achsensteuerschaltung, sodass sie gestartet wird, wobei die stromunabhängige Achsensteuerschaltung eine der unabhängigen Achsensteuerschaltungen angibt, die basierend auf der Traktionsstufenanweisung ausgewählt wird;
Bestimmen, ob eine Spannung einer Zwischengleichstromverbindung der stromunabhängigen Achsensteuerschaltung innerhalb des ersten vorgegebenen Bereichs liegt; und
Starten, wenn die Spannung innerhalb des ersten vorgegebenen Bereichs liegt, einer Wechselrichtervorrichtung der stromunabhängigen Achsensteuerschaltung, um einen Traktionsmotor mit Strom zu versorgen, der mit der Wechselrichtervorrichtung der stromunabhängigen Achsensteuerschaltung verbunden ist.

10. Stromversorgungssteuervorrichtung zur Zugrettung, wobei die Stromversorgungssteuervorrichtung die Stromversorgungsschaltung zur Zugrettung nach einem der Ansprüche 1 bis 4 umfasst, und die Stromversorgungssteuervorrichtung umfasst:
ein Erfassungsmodul (100), konfiguriert zum Erfassen einer Rettungsstromversorgungsanweisung; und
einen Steuermodus (200), konfiguriert zum Steuern, als Reaktion auf die Rettungsstromversorgungsanweisung, eines ersten Stromversorgungstrennschalters und eines zweiten Stromversorgungstrennschalters in einer unabhängigen Achsensteuerschaltung, die basierend auf der Rettungsstromversorgungsanweisung ausgewählt wurde, aus der zweiten vorgegebenen Anzahl von unabhängigen Achsensteuerschaltungen, die einzuschalten sind, um einen geretteten Zug über die unabhängige Achsensteuerschaltung mit Strom zu versorgen, die basierend auf der Rettungsstromversorgungsanweisung ausgewählt worden ist.

## Revendications

1. Circuit d'alimentation électrique pour le secours de train, le circuit d'alimentation électrique étant agencé dans un train de secours et comprenant : un transformateur de traction (10), des moteurs de traction (40), et un onduleur convertisseur (30) comprenant un premier nombre prédéterminé de circuits de commande d'axe indépendants (20),
pour chacun du premier nombre prédéterminé de circuits de commande d'axe indépendants (20), une borne d'entrée du circuit de commande d'axe indépendant (20) étant connectée à un enroulement secondaire d'un transformateur de traction (10) correspondant au circuit de commande d'axe indépendant (20), et une borne de sortie du circuit de commande d'axe indépendant (20) étant connectée à un moteur de traction (40) correspondant au circuit de commande d'axe indépendant (20),
chacun d'un deuxième nombre prédéterminé de circuits de commande d'axe indépendants (20) dans le premier nombre prédéterminé de circuits de commande d'axe indépendants (20) comprenant :
un premier commutateur d'isolation d'alimentation électrique (21) configuré pour connecter un fil positif d'une liaison de courant continu intermédiaire du circuit de commande d'axe indépendant (20) à un train secouru ou déconnecter le fil positif du train secouru, le deuxième nombre prédéterminé étant inférieur ou égal au premier nombre prédéterminé ; et
un deuxième commutateur d'isolation d'alimentation électrique (22) configuré pour connecter un fil négatif de la liaison de courant continu intermédiaire du circuit de commande d'axe indépendant (20) au train secouru ou déconnecter le fil négatif du train secouru.

2. Circuit d'alimentation électrique pour le secours de train selon la revendication 1, chacun du premier nombre prédéterminé de circuits de commande d'axe indépendants (20) comprenant :
un commutateur électrique haute tension connecté à un enroulement secondaire du transformateur de traction (10) correspondant au circuit de commande d'axe indépendant (20) et configuré pour entrer ou isoler une tension d'alimentation qui est obtenue en réduisant une tension d'un réseau électrique par l'intermédiaire du transformateur de traction (10) ;
un dispositif de redressement connecté au commutateur électrique haute tension et configuré pour redresser la tension d'alimentation afin d'obtenir une tension de courant continu ;
une liaison de courant continu intermédiaire connectée au dispositif de redressement et configurée pour sortir et stocker l'énergie électrique du circuit de commande d'axe indépendant (20) ; et
un dispositif onduleur connecté à la liaison de courant continu intermédiaire et configuré pour onduler la tension de courant continu dans la liaison de courant continu intermédiaire afin d'obtenir une tension de courant alternatif, de manière à alimenter un moteur de traction (40) connecté au circuit de commande d'axe indépendant (20).

3. Circuit d'alimentation électrique pour le secours de train selon la revendication 1, une première extrémité du deuxième commutateur d'isolation d'alimentation électrique étant connectée à un fil négatif d'une liaison de courant continu intermédiaire du circuit de commande d'axe indépendant (20) où le deuxième commutateur d'isolation d'alimentation électrique est agencé, et une deuxième extrémité du deuxième commutateur d'isolation d'alimentation électrique étant connectée à un essieu monté du train de secours.

4. Circuit d'alimentation électrique pour le secours de train selon la revendication 1, chacun du deuxième nombre prédéterminé de circuits de commande d'axe indépendants (20) comprenant
un capteur de tension de courant continu intermédiaire configuré pour détecter une tension d'une liaison de courant continu intermédiaire du circuit de commande d'axe indépendant (20).

5. Procédé de commande d'alimentation électrique pour le secours de train, le procédé de commande d'alimentation électrique étant appliqué à un train de secours comprenant le circuit d'alimentation électrique pour le secours de train selon l'une quelconque des revendications 1 à 4, et le procédé de commande d'alimentation électrique comprenant :
l'acquisition d'une instruction d'alimentation électrique de secours (S101, S201) ; et
la commande (S102), en réponse à l'instruction d'alimentation électrique de secours, d'un premier commutateur d'isolation d'alimentation électrique et d'un deuxième commutateur d'isolation d'alimentation électrique dans un circuit de commande d'axe indépendant sélectionné sur la base de l'instruction d'alimentation électrique de secours parmi le deuxième nombre prédéterminé de circuits de commande d'axe indépendants à mettre en marche, afin d'alimenter le train secouru par l'intermédiaire du circuit de commande d'axe indépendant sélectionné sur la base de l'instruction d'alimentation électrique de secours.

6. Procédé de commande d'alimentation électrique pour le secours de train selon la revendication 5, dans un cas où une extrémité du deuxième commutateur d'isolation d'alimentation électrique du circuit de commande d'axe indépendant sélectionné sur la base de l'instruction d'alimentation électrique de secours est connectée à un essieu monté, la commande, en réponse à l'instruction d'alimentation électrique de secours, d'un premier commutateur d'isolation d'alimentation électrique et d'un deuxième commutateur d'isolation d'alimentation électrique dans un circuit de commande d'axe indépendant sélectionné sur la base de l'instruction d'alimentation électrique de secours parmi le deuxième nombre prédéterminé de circuits de commande d'axe indépendants à mettre en marche comprenant :
la commande (S202) du deuxième commutateur d'isolation d'alimentation électrique du circuit de commande d'axe indépendant sélectionné sur la base de l'instruction d'alimentation électrique de secours à mettre en marche ;
la détermination (S203) de si une tension de la liaison de courant continu intermédiaire du circuit de commande d'axe indépendant sélectionné sur la base de l'instruction d'alimentation électrique de secours se situe dans une première plage prédéterminée ; et
la commande (S206), si la tension de la liaison de courant continu intermédiaire du circuit de commande d'axe indépendant sélectionné sur la base de l'instruction d'alimentation électrique de secours se situe dans la première plage prédéterminée, du premier commutateur d'isolation d'alimentation électrique du circuit de commande d'axe indépendant sélectionné sur la base de l'instruction d'alimentation électrique de secours à mettre en marche,
si la tension de la liaison de courant continu intermédiaire du circuit de commande d'axe indépendant sélectionné sur la base de l'instruction d'alimentation électrique de secours ne se situe pas dans la première plage prédéterminée, il étant déterminé si la tension se situe dans une deuxième plage prédéterminée (S204), et
si la tension se situe dans la deuxième plage prédéterminée, il étant déterminé qu'il existe un point de mise à la terre du fil positif dans le circuit de commande d'axe indépendant sélectionné sur la base de l'instruction d'alimentation électrique de secours, et le commutateur électrique haute tension et le deuxième commutateur d'isolation d'alimentation électrique du circuit de commande d'axe indépendant sélectionné sur la base de l'instruction d'alimentation électrique de secours sont mis hors circuit (S205).

7. Procédé de commande d'alimentation électrique pour le secours de train selon la revendication 6, après la commande du premier commutateur d'isolation d'alimentation électrique du circuit de commande d'axe indépendant sélectionné sur la base de l'instruction d'alimentation électrique de secours à mettre en marche, le procédé comprenant en outre :
la détermination (S207) de si la tension se situe dans la première plage prédéterminée ;
la détermination (S208), si la tension ne se situe pas dans la première plage prédéterminée, de si la tension se situe dans la deuxième plage prédéterminée ; et
la détermination (S209), si la tension se situe dans la deuxième plage prédéterminée, qu'il existe un point de mise à la terre du fil positif dans le train secouru et la mise hors circuit du premier commutateur d'isolation d'alimentation électrique et du deuxième commutateur d'isolation d'alimentation électrique.

8. Procédé de commande d'alimentation électrique pour le secours de train selon la revendication 6, après la détermination qu'il existe un point de mise à la terre du fil positif dans le circuit de commande d'axe indépendant sélectionné sur la base de l'instruction d'alimentation électrique de secours, le procédé comprenant en outre :
l'envoi d'une instruction de commutation de circuit de secours à un dispositif d'invite pour inviter un utilisateur à commuter le circuit de commande d'axe indépendant à un autre circuit de commande d'axe indépendant parmi le deuxième nombre prédéterminé de circuits de commande d'axe indépendants.

9. Procédé de commande d'alimentation électrique pour le secours de train selon l'une quelconque des revendications 5 à 8, comprenant en outre :
l'acquisition d'une instruction de niveau de traction ;
la commande d'un commutateur électrique haute tension d'un circuit de commande d'axe indépendant actuel à mettre en marche et la commande d'un dispositif de redressement du circuit de commande d'axe indépendant actuel à démarrer, le circuit de commande d'axe indépendant actuel indiquant l'un des circuits de commande d'axe indépendants qui est sélectionné sur la base de l'instruction de niveau de traction ;
la détermination de si une tension d'une liaison de courant continu intermédiaire du circuit de commande d'axe indépendant actuel se situe dans la première plage prédéterminée ; et
le démarrage, si la tension se situe dans la première plage prédéterminée, d'un dispositif onduleur du circuit de commande d'axe indépendant actuel, afin d'alimenter un moteur de traction connecté au dispositif onduleur du circuit de commande d'axe indépendant actuel.

10. Dispositif de commande d'alimentation électrique pour le secours de train, le dispositif de commande d'alimentation électrique comprenant le circuit d'alimentation électrique pour le secours de train selon l'une quelconque des revendications 1 à 4, et le dispositif de commande d'alimentation électrique comprenant :
un module d'acquisition (100) configuré pour acquérir une instruction d'alimentation électrique de secours ; et
un module de commande (200) configuré pour commander, en réponse à l'instruction d'alimentation électrique de secours, un premier commutateur d'isolation d'alimentation électrique et un deuxième commutateur d'isolation d'alimentation électrique dans un circuit de commande d'axe indépendant sélectionné sur la base de l'instruction d'alimentation électrique de secours parmi le deuxième nombre prédéterminé de circuits de commande d'axe indépendants à mettre en marche, afin d'alimenter un train secouru par l'intermédiaire du circuit de commande d'axe indépendant sélectionné sur la base de l'instruction d'alimentation électrique de secours.
